# EUROPÄISCHE PATENTSCHRIFT

(11) **EP 2 885 833 B1**
(45) Veröffentlichungstag und Bekanntmachung des Hinweises auf die Patenterteilung: **04.10.2017**
(21) Anmeldenummer: 13725969.3
(22) Anmeldetag: 29.05.2013
(51) Int. Cl.: H01M 8/22, H01M 8/0612, H01M 8/0662, H01M 8/12

(54) **VERFAHREN ZUM BETRIEB EINES BRENNSTOFFZELLENSYSTEMS**
METHOD FOR OPERATING A FUEL CELL SYSTEM
PROCÉDÉ DE FONCTIONNEMENT D'UN SYSTÈME DE PILES À COMBUSTIBLE

(30) Priorität: 14.08.2012 DE 102012214435
(43) Veröffentlichungstag der Anmeldung: 24.06.2015
(73) Patentinhaber: ElringKlinger AG, 72581 Dettingen (DE)
(72) Erfinder: KIEFER, Thomas, 76337 Waldbronn (DE); WEBER, André, 76131 Karlsruhe (DE)
(74) Vertreter: Hoeger, Stellrecht & Partner Patentanwälte mbB
(86) Internationale Anmeldenummer: PCT/EP2013/061110
(87) Internationale Veröffentlichungsnummer: WO 2014/026777

(56) Entgegenhaltungen:
- WO-A1-2010/133854
- DE-A1-102010 034 271
- JP-A- 2006 244 814

## Beschreibung

Die vorliegende Erfindung betrifft ein Verfahren zum Betrieb eines Brennstoffzellensystems mit einem Brennstoffzellenstapel, dem anodenseitig ein Brennstoff und kathodenseitig ein Oxidator zugeführt werden.

Brennstoffzellensysteme werden u.a. als Hilfsaggregate (Auxiliary Power Unit, APU) zur Erzeugung von elektrischer Energie an Bord von Kraftfahrzeugen eingesetzt. Als Brennstoffe, die an den Anoden des Brennstoffzellenstapels verstromt werden können, dienen dabei in erster Linie Wasserstoff und Kohlenmonoxid, wobei diese Brenngase durch partielle Oxidation eines herkömmlichen Kraftstoffs (z.B. Diesel oder Benzin) in einem dem Brennstoffzellenstapel vorgeschalteten Reformer erzeugt werden.

Beim Betrieb von derartigen Brennstoffzellensystemen gibt es eine Reihe von bekannten Problemen, die zu einer Verringerung der Leistungsfähigkeit und/oder der Lebensdauer des Brennstoffzellenstapels führen können bzw. zusätzliche Maßnahmen erforderlich machen, die wiederum das Kosten/Leistungsverhältnis des Systems verschlechtern. Diese Probleme ergeben sich im Wesentlichen aus der Zusammensetzung der zur Verfügung stehenden Kraftstoffe und des daraus resultierenden Reformats, und sie betreffen in erster Linie (jedoch nicht ausschließlich) die Start- und Endphase des Betriebs des Brennstoffzellensystems, in denen der Brennstoffzellenstapel noch nicht bzw. nicht mehr seine optimale Betriebstemperatur hat. Diese liegt bei den typischerweise eingesetzten Hochtemperaturbrennstoffzellen im Bereich oberhalb von 700 °C.

Ein generelles Problem ist der Schwefelgehalt der Kraftstoffe, der z.B. bei handelsüblichem Dieselkraftstoff trotz der Bezeichnung "schwefelfrei" bei bis zu 10 ppm liegt. Während diese Menge bei einer Betriebstemperatur des Brennstoffzellenstapels von mehr als 900 °C noch tolerabel ist, führt sie im Temperaturbereich von 700 bis 800 °C, der unter Berücksichtigung des Wirkungsgrades bevorzugt ist, mit der Zeit zu einer Inaktivierung des an der Anode eingesetzten Katalysators (insbesondere Nickel), wobei dann insbesondere kein Kohlenmonoxid mehr umgesetzt wird (Schwefelvergiftung). Als Gegenmaßnahme kann eine Entschwefelungseinheit vorgeschaltet werden, die natürlich zu höheren Kosten und einem höheren Platzbedarf führt.

Während der Startphase des Brennstoffzellensystems ergibt sich das Problem, dass einerseits der Brennstoffzellenstapel auf die gewünschte Betriebstemperatur aufgeheizt werden muss, was durch den vorgewärmten Oxidator (Luftsauerstoff) und gegebenenfalls das heiße Reformat erfolgt, wobei andererseits dieses Reformat eine ungünstige Zusammensetzung aufweist, solange die optimale Betriebstemperatur des Reformers noch nicht erreicht ist. Insbesondere kommt es im Bereich von etwa 300 bis 600 °C zur Ablagerung von Ruß, wenn das heiße Reformat auf das noch kalte Anodenmaterial trifft, was langfristig zu einer Schädigung der Anoden führen kann. Ein Aufheizen des Brennstoffzellenstapels nur durch den Oxidator ist aber ebenfalls nachteilig, weil die dabei auftretenden Temperaturdifferenzen zwischen den Kathoden und den Anoden zu thermischen Spannungen und Rissbildungen führen können, und weil dann der Oxidator über einen nachgeschalteten Restgasbrenner an die Anoden gelangen kann. Eine oxidative Atmosphäre an den Anoden führt zu einer Oxidation des Katalysators (z.B. von Nickel zu Nickeloxid), die zwar prinzipiell reversibel ist, aber zu Schädigungen des Anodenmaterials führen kann.

Ein aus dem Stand der Technik bekanntes Verfahren zum Betrieb eines Brennstoffzellensystems ist in der Druckschrift DE 10 2010 034271 A1 offenbart.

Der Erfindung liegt die Aufgabe zugrunde, ein Verfahren zum Betrieb eines Brennstoffzellensystems vorzuschlagen, bei dem diese Probleme ganz oder teilweise vermieden werden können.

Diese Aufgabe wird bei dem Verfahren der eingangs genannten Art erfindungsgemäß dadurch gelöst, dass mindestens während einer Phase des Betriebs des Brennstoffzellensystems dem Brennstoffzellenstapel sowohl ein Wasserstoff enthaltendes Reformat als auch Harnstoff als Brennstoff zugeführt wird.

Harnstoff (H₂N-CO-NH₂) ist das Amid der Kohlensäure, welches bei Anwesenheit von Wasser zunächst zu Kohlendioxid und Ammoniak hydrolysierbar ist:

H₂N-CO-NH₂ + H₂O → 2NH₃ + CO₂

Bei erhöhten Temperaturen dissoziiert Ammoniak zu Wasserstoff und Stickstoff:

2NH₃ → N₂ + 3H₂

Der im Rahmen der vorliegenden Erfindung eingesetzte Brennstoffzellenstapel umfasst eine Hochtemperaturbrennstoffzelle, insbesondere eine Festoxidbrennstoffzelle (SOFC). Bei deren bevorzugter Betriebstemperatur im Bereich von 700 bis 800 °C liegt das thermodynamische Gleichgewicht der Dissoziationsreaktion fast vollständig auf der Seite von Wasserstoff und Stickstoff, wobei die Einstellung dieses Gleichgewichts durch den an der Anode eingesetzten Katalysator (z.B. Nickel) begünstigt wird. Durch weitere Prozesse, die neben den oben genannten Reaktionen ablaufen, liegen im thermodynamischen Gleichgewicht zwar zusätzlich auch Kohlenmonoxid, Methan und Spuren von höheren Kohlenwasserstoffen vor, der Anteil an Wasserstoff beträgt aber z.B. bei 750 °C ca. 80% der theoretischen Gesamtmenge.

Somit ist Harnstoff als ein Wasserstofflieferant grundsätzlich als Brennstoff für ein Brennstoffzellensystem geeignet. Verschiedene Varianten seines Einsatzes sowie die dadurch erzielbaren Vorteile sollen nun im Folgenden dargestellt werden. Gemäß des erfindungsgemäßen Verfahrens wird Harnstoff nicht als der einzige Brennstoff verwendet, sondern als Zusatzbrennstoff, der in einer oder mehreren Phasen des Betriebs einen Hauptbrennstoff ganz oder teilweise ersetzt. Vorzugsweise umfasst daher das Brennstoffzellensystem einen Reformer zur Erzeugung eines Wasserstoff enthaltenden Reformats aus einem Kohlenwasserstoffgemisch, wobei das Reformat während mindestens einer Phase des Betriebs dem Brennstoffzellenstapel als Brennstoff zugeführt wird. Das Kohlenwasserstoffgemisch ist insbesondere ein herkömmlicher Kraftstoff wie z.B. Diesel oder Benzin, und das Reformat dient dem Brennstoffzellensystem als Hauptbrennstoff.

Günstigerweise umfasst das Brennstoffzellensystem ferner einen Restgasbrenner, in dem der anodenseitig nicht umgesetzte Brennstoff oxidiert wird. Die dabei entstehende Wärme wird insbesondere dazu genutzt, mittels eines Schichtwärmeüberträgers die Kathodenzuluft aufzuheizen. Überschüssige Wärme kann vom System abgegeben werden, z.B. an die Standheizung eines Kraftfahrzeugs, in dem das Brennstoffzellensystem eingesetzt wird.

Die Probleme, die sich während der Startphase des Brennstoffzellensystems durch eine nur kathodenseitige Aufheizung des Brennstoffzellenstapels und/oder durch Rußbildung an der Anode und/oder durch einen Rückstrom des Oxidators durch den Restgasbrenner auf die Anode ergeben können, wurden bereits eingangs beschrieben. Diese Probleme können gemäß einer bevorzugten Ausführungsform des erfindungsgemäßen Verfahrens dadurch vermieden werden, dass dem Brennstoffzellenstapel während der Startphase Harnstoff als Brennstoff zugeführt wird. Unter der Startphase ist dabei der Zeitraum von der Inbetriebnahme des Brennstoffzellensystems bis zum Erreichen der vorgesehenen Betriebstemperatur des Brennstoffzellenstapels zu verstehen. Bevorzugt wird während dieser Startphase Harnstoff als einziger Brennstoff zugeführt. Dadurch werden mehrere Vorteile erreicht: Erstens wird aufgrund der Durchströmung der Anoden mit Brennstoff ein Rückstrom des Oxidators aus dem Restgasbrenner prinzipiell verhindert. Da die Zersetzungsprodukte des Harnstoffs im gesamten Temperaturbereich zu einer insgesamt reduzierenden Atmosphäre führen, wird damit eine Oxidation des anodischen Katalysators ausgeschlossen. Ebenso ausgeschlossen ist eine Rußbildung an der Anode, da diese bei der thermischen Zersetzung von Harnstoff nicht auftritt. Schließlich ermöglicht die Zufuhr von Harnstoff bei entsprechender Vorwärmung auch ein gleichmäßiges Aufheizen des Brennstoffzellenstapels sowohl über die Anoden als auch die Kathoden, sodass thermische Spannungen innerhalb des Stapels vermieden werden.

Die Menge des während der Startphase zugeführten Harnstoffs kann in diesem Fall abhängig davon variiert werden, ob lediglich ein Rückstrom des Oxidators über den Restgasbrenner verhindert werden soll oder ob zusätzlich der Brennstoffzellenstapel über die Anoden aufgeheizt werden soll. Im ersten Fall wird eine geringere Menge ausreichend sein, das Aufheizen des Brennstoffzellenstapels erfolgt dann überwiegend durch die vorgewärmte Kathodenluft und erfolgt entsprechend langsamer. Im zweiten Fall kann durch eine höhere Menge an Harnstoff die Startphase verkürzt werden.

Die Anteile der Zersetzungsprodukte des Harnstoffs, die an den Anoden des Brennstoffzellenstapels nicht umgesetzt wurden (insbesondere Wasserstoff und gegebenenfalls Kohlenmonoxid) können wie im Falle eines Reformats aus einem herkömmlichen Kraftstoff in einem Restgrasbrenner nachverbrannt werden, wobei die entstehende Wärme zum Vorwärmen der Kathodenluft und gegebenenfalls des Brennstoffs genutzt wird.

Gemäß einer weiteren bevorzugten Ausführungsform der Erfindung, die alternativ oder insbesondere zusätzlich verwirklicht sein kann, wird dem Brennstoffzellenstapel während einer Endphase des Betriebs Harnstoff als Brennstoff zugeführt. Unter der Endphase ist dabei der Zeitraum zu verstehen, während dem der Brennstoffzellenstapel von der vorgesehenen Betriebstemperatur auf Umgebungstemperatur abkühlt. Bevorzugt wird während der Endphase Harnstoff als einziger Brennstoff zugeführt. Gemäß dem Stand der Technik ist es häufig vorgesehen, dass während des Abkühlens des Brennstoffzellenstapels überhaupt kein Brennstoff und Oxidator mehr zugeführt werden. Dies hat allerdings den Nachteil, dass rückströmendes Abgas an die Anode gelangen und dort unerwünschte Wechselwirkungen mit dem Katalysator eingehen kann. Durch die Zuführung von Harnstoff während des Abkühlens kann ein solcher Abgasrückstrom ausgeschlossen werden.

Ein weiterer wesentlicher Vorteil der Verwendung von Harnstoff während einer Endphase des Betriebs des Brennstoffzellensystems besteht darin, dass der verfügbare Harnstoff keinerlei schwefelhaltige Verbindungen enthält. Somit kann die Endphase des Betriebs zur Regeneration des anodischen Katalysators genutzt werden, wenn das Brennstoffzellensystem zuvor mit einem Reformat aus einem schwefelhaltigen Kraftstoff betrieben wurde. Es ist bekannt, dass die Schwefelvergiftung des Katalysators prinzipiell reversibel ist, wenn eine Beaufschlagung mit einem schwefelfreien Brennstoff erfolgt. Die Tatsache, dass Harnstoff in reiner Form, d.h. ohne nennenswerte Verunreinigungen, kommerziell erhältlich ist, stellt unabhängig davon, in welcher Phase des Betriebs er eingesetzt wird, einen weiteren Vorteil dar. Erfindungsgemäß ist es vorgesehen, dass dem Brennstoffzellenstapel während des Betriebs zwischen der Startphase und der Endphase Harnstoff als Brennstoff zugeführt wird. Günstigerweise wird dem Brennstoffzellenstapel in diesem Fall sowohl ein Wasserstoff enthaltendes Reformat (aus einem herkömmlichen Kraftstoff) als auch Harnstoff zugeführt.

Der Vorteil einer Kombination von Kraftstoffreformat und Harnstoff ist insbesondere darin zu sehen, dass dadurch eine einfachere Anpassung der Leistung des Brennstoffzellensystems ermöglicht wird. Da die eingesetzten Reformer meistens auf einen bestimmten Durchsatz (entsprechend einer bestimmten Leistung des Brennstoffzellensystems) optimiert sind und eine Abweichung von diesem Durchsatz die Effizienz verringert, ist es besonders vorteilhaft, wenn die Leistung des Brennstoffzellensystems im Wesentlichen über die Menge an zugeführtem Harnstoff variiert wird, während die Menge an zugeführtem Reformat im Wesentlichen konstant gehalten wird. So kann insbesondere der Reformer derart ausgelegt sein, dass er die Grundlast des Systems (z.B. 5 kW) abdeckt, und das bei kurzfristigen Erhöhungen der erforderlichen Leistung Harnstoff als zusätzlicher Brennstoff zugeführt wird, dessen Menge im Gegensatz zum Durchsatz des Reformers ohne Weiteres variiert werden kann.

Im umgekehrten Fall, wenn die Leistungsanforderung unter die Grundlast absinkt, kann vorgesehen sein, dass der Reformer heruntergefahren wird und dem Brennstoffzellenstapel ausschließlich Harnstoff als Brennstoff zugeführt wird, um den verringerten Leistungsbedarf zu decken.

Alternativ oder zusätzlich zu den vorstehend beschriebenen Varianten kann es auch vorteilhaft sein, wenn dem Brennstoffzellenstapel während einer oder mehrerer Regenerationsphasen ausschließlich Harnstoff als Brennstoff zugeführt wird. Ähnlich wie in der Endphase können während solcher Regenerationsphasen, deren Häufigkeit und Länge je nach Bedarf variierbar sind, sowohl Schwefelverbindungen als auch abgelagerter Ruß durch eine Harnstoffbeaufschlagung zumindest teilweise wieder von der Anode entfernt werden. Es erfolgt also eine jeweils Regeneration nach einer vorangegangenen Betriebsphase mit einem Kraftstoffreformat.

Bei allen Ausführungsformen des erfindungsgemäßen Verfahrens, die vorstehend beschrieben wurden, erfolgt die Zuführung des Harnstoffs zum Brennstoffzellenstapel bevorzugt in Form einer verdampften wässrigen Harnstofflösung. Das Vorhandensein von Wasser ist für die Erzeugung eines Wasserstoff enthaltenden Gasgemisches gemäß dem oben beschrieben thermodynamischen Gleichgewicht erforderlich, da dieses im ersten Schritt auf einer Hydrolyse des Harnstoffs zu Kohlendioxid und Ammoniak basiert (wasserfreier Harnstoff zersetzt sich bei etwa 130 °C zu Isocyansäure und Ammoniak). Es ist zwar auch denkbar, dass die wässrige Lösung erst im Brennstoffzellenstapel verdampft wird, die Zuführung einer bereits gasförmigen Zusammensetzung ist jedoch unter verfahrenstechnischen Gesichtspunkten vorzuziehen.

Durch die Bereitstellung des Harnstoffs als wässrige Lösung gestaltet sich die Lagerung, Handhabung und Betankung äußerst unproblematisch, im Gegensatz zu einem gasförmigen oder unter Druck verflüssigtem Brennstoff wie insbesondere Wasserstoff, dessen Verwendung einen erheblichen sicherheitstechnischen Aufwand erfordert. Auch unter toxikologischen Gesichtspunkten ist Harnstoff unbedenklich.

Die eingesetzte wässrige Harnstofflösung weist bevorzugt eine Konzentration von 30 bis 80 Gew.% auf. Durch eine Erhöhung der Konzentration der Lösung verringert sich der Platzbedarf für eine bestimmte Menge an Harnstoff, andererseits wird für den gewünschten Zerfall des Harnstoffs in etwa eine äquimolare Menge an Wasser benötigt, was einer Lösung mit einer Konzentration von ca. 77 Gew.% entspricht.

Harnstoff wird bei Verbrennungsmotoren von Kraftfahrzeugen, insbesondere bei LKW, auch zur Reduzierung des Stickoxidgehaltes im Abgas eingesetzt. Hierzu ist unter der Bezeichnung "AdBlue" eine 32,5 Gew.%ige wässrige Harnstofflösung im Handel, die in den Abgasstrom eingespritzt wird. Diese Lösung, für die bereits eine entsprechende Infrastruktur existiert, kann grundsätzlich auch im Rahmen der vorliegenden Erfindung als Brennstoff eingesetzt werden, auch wenn hierfür eine etwas höhere Harnstoffkonzentration eventuell vorteilhafter wäre.

Bei einer Ausführungsform der Erfindung wird die wässrige Harnstofflösung in einem Reformer verdampft, d.h. in dem für die Reformierung eines Kohlenwasserstoffgemisches vorgesehenen Reformer. Dies bietet sich insbesondere an, wenn im Rahmen des Verfahrens ausschließlich oder überwiegend eine kombinierte Verwendung von Reformat und Harnstoff als Brennstoff vorgesehen ist. In diesem Fall müssen bei dem Brennstoffzellensystem keine wesentlichen zusätzlichen Komponenten vorgesehen werden.

Besonders günstig ist es jedoch, wenn die wässrige Harnstofflösung in einer separaten Verdampfungsvorrichtung des Brennstoffzellensystems verdampft wird. Dadurch wird es ermöglicht, den Brennstoffzellenstapel mit Harnstoff als einzigem Brennstoff zu versorgen, was insbesondere während der Startphase und der Endphase des Betriebs besonders vorteilhaft ist, wie oben ausgeführt wurde. Durch eine Trennung der Harnstoffzuführung vom Reformer kann auch eine Beeinflussung der im Reformer ablaufenden Prozesse ausgeschlossen werden.

Die verdampfte wässrige Harnstofflösung wird dem Brennstoffzellenstapel vorzugsweise bei einer Temperatur von 700 °C oder mehr zugeführt, insbesondere bei einer Temperatur von 700 bis 800 °C, was der bevorzugten Betriebstemperatur einer Festoxidbrennstoffzelle entspricht. Der Betrieb mit Harnstoff ist jedoch auch bei Temperaturen oberhalb von 800 °C möglich, die Gleichgewichtszusammensetzung des bei der Zersetzung des Harnstoffs resultierenden Gasgemisches ändert sich bei höheren Temperaturen nur unwesentlich.

Gegenstand der vorliegenden Erfindung ist ferner ein Brennstoffzellensystem mit den in Anspruch 13 angeführten Merkmalen. Die der Erfindung zugrunde liegende Aufgabe wird bei dem Brennstoffzellensystem dadurch gelöst, dass es eine Verdampfungsvorrichtung für eine wässrige Harnstofflösung umfasst, wobei die verdampfte wässrige Harnstofflösung dem Brennstoffzellenstapel als Brennstoff zuführbar ist.

Vorteile und bevorzugte Ausführungsformen des erfindungsgemäßen Brennstoffzellensystems wurden bereits im Zusammenhang mit dem erfindungsgemäßen Verfahren erläutert. Das erfindungsgemäße Brennstoffzellensystem eignet sich insbesondere zur Durchführung des erfindungsgemäßen Verfahrens.

Die vorliegende Erfindung eignet sich insbesondere zur Verwendung bei Brennstoffzellensystemen, die an Bord von Kraftfahrzeugen als Hilfsaggregate zur Erzeugung von elektrischer Energie dienen. Die Erfindung ist jedoch nicht auf diesen Anwendungsbereich beschränkt, sondern eignet sich z.B. auch für Brennstoffzellensysteme in stationären Anwendungen.

Diese und weitere Vorteile der Erfindung werden anhand der nachfolgenden Ausführungsbeispiele unter Bezugnahme auf die Figuren näher erläutert.

Es zeigen im Einzelnen:
- Figur 1:: eine schematische Darstellung eines erfindungsgemäßen Brennstoffzellensystems; und
- Figur 2:: ein Diagramm betreffend die Zusammensetzung des bei der Zersetzung von Harnstoff entstehenden Gasgemisches in Abhängigkeit von der Temperatur.

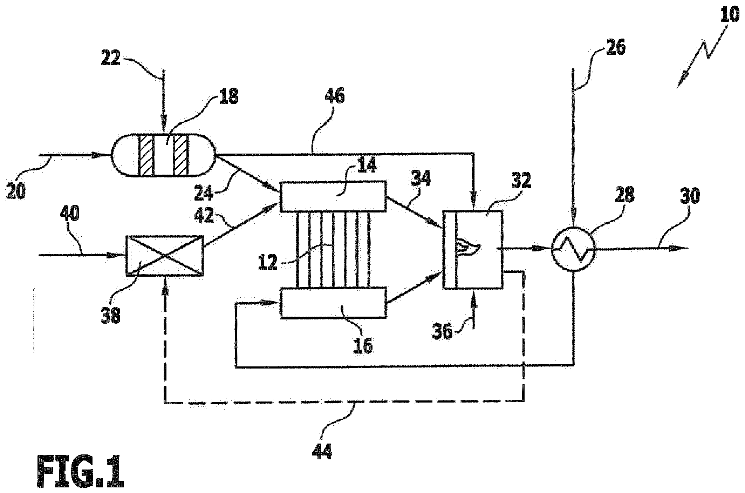

Die Figur 1 zeigt schematisch ein erfindungsgemäßes Brennstoffzellensystem, welches als Ganzes mit 10 bezeichnet ist. Das Brennstoffzellensystem 10 umfasst einen Brennstoffzellenstapel 12 mit einer Vielzahl von Anoden und Kathoden, die hier vereinfacht als Anode 14 und Kathode 16 dargestellt sind. Bei dem Brennstoffzellenstapel 12 handelt es sich um eine Hochtemperaturbrennstoffzelle, insbesondere um eine Festoxidbrennstoffzelle (SOFC).

Der Anode 14 vorgeschaltet ist ein Reformer 18, mit dem aus einem zugeführten Kraftstoff 20, z.B. Diesel oder Benzin, durch partielle Oxidation mit Luftsauerstoff 22 ein Wasserstoff enthaltendes Reformat 24 erzeugt werden kann. Dieses Reformat 24 ist der Anode 14 als Brennstoff zuführbar.

Der Kathode 16 kann Luftsauerstoff 26 als Oxidator zugeführt werden, wobei diese Kathodenzuluft 26 mittels eines Schichtwärmeüberträgers 28 vorgewärmt wird. Die dem Schichtwärmeüberträger 28 zugefügte Wärme resultiert aus dem Abgasstrom 30 eines Restgasbrenners 32, in dem an der Anode 14 nicht umgesetzter Brennstoff 34 mit zusätzlichem Luftsauerstoff 36 nachverbrannt wird.

Die vorstehend beschriebenen Komponenten des Brennstoffzellensystems 10 entsprechen dem Stand der Technik bei entsprechenden Systemen, wie sie insbesondere als Hilfsaggregat zur Erzeugung von elektrischer Energie an Bord von Kraftfahrzeugen eingesetzt werden. Das erfindungsgemäße Brennstoffzellensystem 10 umfasst jedoch zusätzlich eine der Anode 14 vorgeschaltete Verdampfungsvorrichtung 38 für eine wässrige Harnstofflösung 40, wobei die verdampfte wässrige Harnstofflösung 42 dem Brennstoffzellenstapel 12 als Brennstoff zuführbar ist. Die für die Verdampfung der Harnstofflösung 40 erforderliche Energie wird dabei ganz oder teilweise durch den Restgasbrenner 32 zur Verfügung gestellt, was durch die gestrichelte Linie 44 angedeutet ist. Dies kann im Detail auf verschiedene Weise realisiert werden, z.B. durch einen Wärmetauscher oder durch eine bauliche Integration der Verdampfungsvorrichtung 38 in den Restgasbrenner 32.

Falls die von dem Restgasbrenner 32 erzeugte Wärme nicht ausreichend ist, um sowohl die Kathodenzuluft 26 vorzuwärmen als auch die zur Verdampfung der wässrigen Harnstofflösung 40 benötigte Energie zur Verfügung zu stellen, kann bei dem Brennstoffzellensystem 10 ferner ein Zusatzbrenner vorgesehen sein (in der Figur nicht dargestellt), in dem Kraftstoff 20 verbrannt wird. Überschüssige Wärme des Abgasstroms 30 kann hingehen extern genutzt wird, z.B. für eine Standheizung des Kraftfahrzeugs.

Bei dem erfindungsgemäßen Verfahren zum Betrieb des Brennstoffzellensystems 10 wird dem Brennstoffzellenstapel 12 zwischen einer Start- und einer Endphase sowohl ein Wasserstoff enthaltendes Reformat als auch die verdampfte Harnstofflösung 42 als Brennstoff zugeführt. Besonders vorteilhaft ist die Zuführung der verdampften Harnstofflösung 42 als einziger Brennstoff während der Startphase des Brennstoffzellensystems 10, wenn der Brennstoffzellenstapel 12 noch nicht seine vorgesehene Betriebstemperatur (bevorzugt 700 bis 800 °C) erreicht hat, sodass eine Zuführung des Reformats 24 zur Abscheidung von Ruß an der Anode 14 führen würde oder ein Rückstrom von Kathodenzuluft 26 aus dem Restgasbrenner 32 zu einer Oxidation des anodischen Katalysators (z.B. Nickel). Durch eine Verwendung von Harnstoff als einzigem Brennstoff während der Startphase können beide Probleme wirksam vermieden werden. Während der Startphase kann das beim Hochfahren des Reformers 18 erzeugte Reformat über einen Bypass 46 direkt dem Restgasbrenner 32 zugeleitet werden.

Ähnliche Vorteile ergeben sich auch durch eine Verwendung der verdampften Harnstofflösung 42 als einzigem Brennstoff während der Endphase des Betriebs, wenn der Reformer 18 nicht mehr in Betrieb ist und der Brennstoffzellenstapel 12 von seiner Betriebstemperatur abkühlt. Die verdampfte Harnstofflösung 42 wirkt in diesem Fall wie ein Schutzgas, welches eine Oxidation an der Anode 14 durch rückströmende Kathodenzuluft 26 aus dem Restgasbrenner 32 verhindert.

Im Rahmen des erfindungsgemäßen Verfahrens ist es vorgesehen, dass die verdampfte Harnstofflösung 42 während des Betriebs zwischen der Startphase und der Endphase der Anode 14 als Brennstoff zugeführt wird, und zwar in Kombination mit dem Reformat 24. Durch eine Zudosierung der verdampften Harnstofflösung 42 kann insbesondere auf variierende Leistungsanforderungen an das Brennstoffzellensystem 10 flexibel reagiert werden, da der Durchsatz des Reformers 18 meistens auf einen relativ festen Wert optimiert ist, und Abweichungen von diesem Wert zu Effizienzverlusten führen.

Die verdampfte wässrige Harnstofflösung 42 wird dem Brennstoffzellenstapel 12 günstigerweise bei der jeweiligen Betriebstemperatur des Brennstoffzellenstapels 12 zugeführt, insbesondere in einem Bereich von 700 bis 800 °C. In diesem Temperaturbereich liegt im thermodynamischen Gleichgewicht ein aus der wässrigen Harnstofflösung resultierendes Gasgemisch vor, welches im Wesentlichen aus Wasser, Wasserstoff, Stickstoff, Kohlendioxid und Kohlenmonoxid besteht.

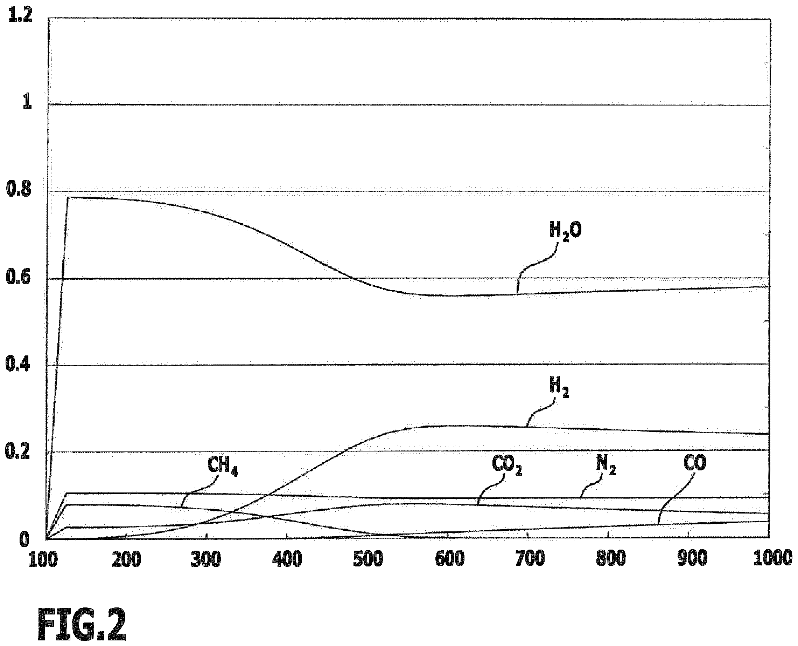

In dem Diagramm in der Figur 2 ist die Zusammensetzung dieses Gasgemisches im jeweiligen thermodynamischen Gleichgewicht in einem Temperaturbereich von 125 bis 1000 °C angegeben, ausgehend von einer 32,5 Gew.%igen wässrigen Harnstofflösung, die unter der Bezeichnung "AdBlue" im Handel ist. Auf der Abszisse ist die Temperatur in Grad Celsius aufgetragen und auf der Ordinate der Partialdruck der einzelnen Verbindungen in atm.

Wie aus dem Diagramm ersichtlich ist, liegen im relevanten Temperaturbereich von 700 bis 800 °C praktisch nur Wasser, Wasserstoff, Stickstoff, Kohlenmonoxid und Kohlendioxid vor. Methan liegt im Wesentlichen nur unterhalb von ca. 500 °C vor. Der Anteil an Ammoniak liegt im gesamten dargestellten Temperaturbereich unterhalb von 0,1%, und der Anteil an höheren Kohlenwasserstoffen bei weniger als 1 ppm. Es wird kein Ruß gebildet.

Die bei etwa 750 °C im Gleichgewicht vorliegende Menge an Wasserstoff entspricht etwa 80% der maximal möglichen Menge. Auf Grundlage dieser Werte lässt sich errechnen, dass bei gleicher Leistung und gleicher elektrochemischen Ausnutzung etwa das 6,5-fache Volumen einer 32,5 Gew.%igen Harnstofflösung im Vergleich zu Dieselkraftstoff benötigt wird, um dasselbe Stromäquivalent zu erzielen. Durch Erhöhung der Harnstoffkonzentration kann das benötige Volumen entsprechend verringert werden.

## Patentansprüche

1. Verfahren zum Betrieb eines Brennstoffzellensystems mit einem Brennstoffzellenstapel umfassend eine Hochtemperaturbrennstoffzelle, dem anodenseitig ein Brennstoff und kathodenseitig ein Oxidator zugeführt werden,
**dadurch gekennzeichnet, dass** mindestens während einer Phase des Betriebs des Brennstoffzellensystems zwischen einer Startphase und einer Endphase dem Brennstoffzellenstapel sowohl ein Wasserstoff enthaltendes Reformat als auch Harnstoff als Brennstoff zugeführt werden.

2. Verfahren nach Anspruch 1, wobei der Brennstoffzellenstapel eine Festoxidbrennstoffzelle (SOFC) umfasst.

3. Verfahren nach einem der vorangehenden Ansprüche, wobei das Brennstoffzellensystem einen Reformer zur Erzeugung des Wasserstoff enthaltenden Reformats aus einem Kohlenwasserstoffgemisch umfasst.

4. Verfahren nach einem der vorangehenden Ansprüche, wobei das Brennstoffzellensystem einen Restgasbrenner umfasst, in dem der anodenseitig nicht umgesetzte Brennstoff oxidiert wird.

5. Verfahren nach einem der vorangehenden Ansprüche, wobei dem Brennstoffzellenstapel während einer Startphase des Betriebs Harnstoff als Brennstoff zugeführt wird.

6. Verfahren nach einem der vorangehenden Ansprüche, wobei dem Brennstoffzellenstapel während einer Endphase des Betriebs Harnstoff als Brennstoff zugeführt wird.

7. Verfahren nach einem der vorangehenden Ansprüche, wobei die Leistung des Brennstoffzellensystems im Wesentlichen über die Menge an zugeführtem Harnstoff variiert wird, während die Menge an zugeführtem Reformat im Wesentlichen konstant gehalten wird.

8. Verfahren nach einem der vorangehenden Ansprüche, wobei dem Brennstoffzellenstapel während einer oder mehrerer Regenerationsphasen ausschließlich Harnstoff als Brennstoff zugeführt wird.

9. Verfahren nach einem der vorangehenden Ansprüche, wobei der Harnstoff dem Brennstoffzellenstapel in Form einer verdampften wässrigen Harnstofflösung zugeführt wird.

10. Verfahren nach Anspruch 9, wobei die wässrige Harnstofflösung eine Konzentration von 30 bis 80 Gew.% aufweist.

11. Verfahren nach Anspruch 9 oder 10, wobei die wässrige Harnstofflösung in einem Reformer oder in einer separaten Verdampfungsvorrichtung des Brennstoffzellensystems verdampft wird.

12. Verfahren nach einem der Ansprüche 9 bis 11, wobei die verdampfte wässrige Harnstofflösung dem Brennstoffzellenstapel bei einer Temperatur von 700 °C oder mehr zugeführt wird, insbesondere bei einer Temperatur von 700 bis 800 °C.

13. Brennstoffzellensystem (10) mit einem Brennstoffzellenstapel (12) umfassend eine Hochtemperaturbrennstoffzelle, dem anodenseitig (14) ein Brennstoff (20) und kathodenseitig (16) ein Oxidator (26) zuführbar sind, **dadurch gekennzeichnet, dass** das Brennstoffzellensystem einen Reformer (18) zur Erzeugung eines Wasserstoff enthaltenden Reformats (24) aus einem Kohlenwasserstoffgemisch und eine separate Verdampfungsvorrichtung (38) für eine wässrige Harnstofflösung (40) umfasst, wobei die verdampfte wässrige Harnstofflösung (42) dem Brennstoffzellenstapel (12) allein oder in Kombination mit dem Reformat (24) als Brennstoff (20) zuführbar ist.

## Claims

1. Method for operating a fuel cell system having a fuel cell stack comprising a high temperature fuel cell, to which a fuel is supplied on the anode side and an oxidising agent is supplied on the cathode side,
**characterised in that** at least during one phase of the operation of the fuel cell system between a start phase and an end phase, both a hydrogen-containing reformate and urea are supplied to the fuel cell stack as a fuel.

2. Method according to claim 1, wherein the fuel cell stack comprises a solid oxide fuel cell (SOFC).

3. Method according to one of the preceding claims, wherein the fuel cell system comprises a reformer for generating the hydrogen-containing reformate from a hydrocarbon mixture.

4. Method according to one of the preceding claims, wherein the fuel cell system comprises a residual gas burner in which the fuel not converted on the anode side is oxidised.

5. Method according to one of the preceding claims, wherein urea is supplied to the fuel cell stack as a fuel during a start phase of the operation.

6. Method according to one of the preceding claims, wherein urea is supplied to the fuel cell stack as a fuel during an end phase of the operation.

7. Method according to one of the preceding claims, wherein the output of the fuel cell system is substantially varied by means of the quantity of urea supplied, whilst the quantity of reformate supplied is kept substantially constant.

8. Method according to one of the preceding claims, wherein exclusively urea is supplied to the fuel cell stack as a fuel during one or more regeneration phases.

9. Method according to one of the preceding claims, wherein the urea is supplied to the fuel cell stack in the form of a vaporised aqueous urea solution.

10. Method according to claim 9, wherein the aqueous urea solution has a concentration of 30% to 80% by weight.

11. Method according to claim 9 or 10, wherein the aqueous urea solution is evaporated in a reformer or in a separate evaporating device of the fuel cell system.

12. Method according to one of the claims 9 to 11, wherein the evaporated aqueous urea solution is supplied to the fuel cell stack at a temperature of 700°C or more, in particular at a temperature of 700°C to 800°C.

13. Fuel cell system (10) with a fuel cell stack (12) comprising a high temperature fuel cell, to which a fuel (20) can be supplied on the anode side (14) and an oxidising agent (26) can be supplied on the cathode side (16), **characterized in that** the fuel cell system comprises a reformer (18) for generating a hydrogen-containing reformate (24) from a hydrocarbon mixture and a separate evaporating device (38) for an aqueous urea solution (40), wherein the evaporated aqueous urea solution (42) can be supplied to the fuel cell stack (12) as a fuel (20), alone or in combination with the reformate (24).

## Revendications

1. Procédé servant à faire fonctionner un système de piles à combustible avec un empilement de piles à combustible comprenant une pile à combustible à température élevée, auquel un combustible est amené côté anode et un oxydant est amené côté cathode,
**caractérisé en ce qu'**à la fois un reformat contenant de l'hydrogène et de l'urée sont amenés en tant que combustibles, à l'empilement de piles à combustible, au moins au cours d'une phase du fonctionnement du système de piles à combustible, entre une phase de démarrage et une phase finale.

2. Procédé selon la revendication 1, dans lequel l'empilement de piles à combustible comprend une pile à combustible à oxydes solides (SOFC).

3. Procédé selon l'une quelconque des revendications précédentes, dans lequel le système de piles à combustible comprend un reformeur servant à produire le reformat contenant de l'hydrogène à partir d'un mélange d'hydrocarbures.

4. Procédé selon l'une quelconque des revendications précédentes, dans lequel le système de piles à combustible comprend un brûleur de gaz résiduel, dans lequel le combustible non employé côté anode est oxydé.

5. Procédé selon l'une quelconque des revendications précédentes, dans lequel de l'urée est amenée en tant que combustible, à l'empilement de piles à combustible, au cours d'une phase de démarrage du fonctionnement.

6. Procédé selon l'une quelconque des revendications précédentes, dans lequel de l'urée est amenée en tant que combustible, à l'empilement de piles à combustible, au cours d'une phase finale du fonctionnement.

7. Procédé selon l'une quelconque des revendications précédentes, dans lequel la puissance du système de piles à combustible varie sensiblement selon la quantité d'urée amenée, tandis que la quantité de reformat amené est maintenue sensiblement constante.

8. Procédé selon l'une quelconque des revendications précédentes, dans lequel exclusivement de l'urée est amenée en tant que combustible à l'empilement de piles à combustible, au cours d'une ou de plusieurs phases de régénération.

9. Procédé selon l'une quelconque des revendications précédentes, dans lequel l'urée est amenée à l'empilement de piles à combustible sous la forme d'une solution d'urée aqueuse évaporée.

10. Procédé selon la revendication 9, dans lequel la solution d'urée aqueuse présente une concentration allant de 30 à 80 % en poids.

11. Procédé selon la revendication 9 ou 10, dans lequel la solution d'urée aqueuse est évaporée dans un reformeur ou dans un dispositif d'évaporation séparé du système de piles à combustible.

12. Procédé selon l'une quelconque des revendications 9 à 11, dans lequel la solution d'urée aqueuse évaporée est amenée à l'empilement de piles à combustible à une température de 700 °C ou plus, en particulier à une température allant de 700 à 800 °C.

13. Système de piles à combustible (10) comprenant un empilement de piles à combustible (12)
comprenant une pile à combustible à température élevée, à laquelle un combustible (20) peut être amené côté anode (14) et un oxydant (26) peut être amené côté cathode (16), **caractérisé en ce que**
le système de piles à combustible comprend un reformeur (18) servant à produire un reformat (24) contenant de l'hydrogène à partir d'un mélange d'hydrocarbures et un dispositif d'évaporation (38) séparé pour une solution d'urée (40) aqueuse, dans lequel la solution d'urée (42) aqueuse évaporée peut être amenée à l'empilement de piles à combustible (12), seule ou en combinaison avec le reformat (24) en tant que combustible (20).
